# EUROPÄISCHE PATENTSCHRIFT

(11) **EP 1 275 981 B1**
(45) Veröffentlichungstag und Bekanntmachung des Hinweises auf die Patenterteilung: **29.03.2006**
(21) Anmeldenummer: 02012782.5
(22) Anmeldetag: 10.06.2002
(51) Int. Cl.: G01S 17/93, B60Q 1/52

(54) **Vorrichtung zur Verbesserung der Sicht in Fahrzeugen**
Device for improving visibility in vehicles
Dispositif d'amélioration de la visibilité dans des véhicules

(30) Priorität: 30.06.2001 DE 10131840
(43) Veröffentlichungstag der Anmeldung: 15.01.2003
(73) Patentinhaber: DaimlerChrysler AG, 70567 Stuttgart (DE)
(72) Erfinder: Holz, Michael, 89250 Senden (DE); Weidel, Edgar, 89250 Senden (DE)

(56) Entgegenhaltungen:
- EP-A- 0 997 746
- DE-A- 4 032 927
- DE-A- 19 756 706
- GB-A- 2 271 139
- US-A- 5 477 461

## Beschreibung

Die Erfindung betrifft eine Vorrichtung zur Verbesserung der Sicht in einem Fahrzeug, nach dem Oberbegriff von Patentanspruch 1.

Schlechte Sicht bei Nacht ist eine anstrengende und gefährliche Situation, die von vielen Fahrern gefürchtet wird. Als Folge der schlechten Sicht ist die Unfallhäufigkeit nachts deutlich höher als bei Fahrten bei Tag und guter Sicht. Insbesondere treten bei Nacht folgende Schwierigkeiten auf:
- Die Sichtweite mit Abblendlicht bei Gegenverkehr ist gering und wird von vielen Fahrern falsch eingeschätzt. Das führt zu einem späten Erkennen von unbeleuchteten Hindernissen, Fußgängern, Radfahrern ohne Licht und von Tieren und damit zu Unfällen.
- Durch die Scheinwerfer entgegenkommender Fahrzeuge und deren Reflexe vor allem bei nasser Fahrbahn wird der Fahrer geblendet, der Fahrer fährt kurzzeitig in ein schwarzes Loch. Besonders gefährdet sind nachtblinde und ältere Fahrer wegen ihrer geringeren Sehleistung.
- Bei Regen, Nebel und Schneetreiben können die Sichtverhältnisse nochmals deutlich schlechter sein.

Eine Verbesserung der Sicht bei Nacht wird durch ein optoelektronisches System erreicht, das in der DE 40 07 646 A1 dargelegt ist. Das System nimmt ein Videobild einer Verkehrsszene auf und stellt es dem Fahrer geeignet dar. Das dargestellte Bild enthält zusätzliche Informationen, die der Fahrer mit seinen eigenen Augen nicht oder nur mit Mühe erfassen kann, insbesondere bei Dunkelheit, schlechter Witterung und Nebel.

Das System enthält zusätzlich zu den normalen Scheinwerfern einen Infrarotscheinwerfer, der im nahen Infrarot emittierende Laserdioden als Lichtquelle nutzt. Die Laserdioden werden gepulst betrieben. Eine CCD-Kamera zur Aufnahme des Videobildes ist im Dachbereich des Fahrzeuges untergebracht. Die CCD-Kamera besitzt einen elektronischen Verschluss, der mit den Laserdioden synchronisiert ist. Vor dem Kameraobjektiv ist ein optisches Bandpassfilter angebracht. Das Videobild wird dem Fahrer auf einem LCD-Display gezeigt. Die Laser emittieren bei einer Wellenlänge von 810 nm im nahen Infrarot. Da das infrarote Licht für das menschliche Auge nahezu nicht sichtbar ist und die verwendete Lichtleistung nicht höher als bei einem konventionellen Fahrzeugscheinwerfer ist, kann permanent aufgeblendet beleuchtet werden.

In der genannten Druckschrift wird außerdem vorgeschlagen, die Helligkeit der Beleuchtung abhängig vom Abstrahlwinkel zu variieren, zum Beispiel um den Vordergrund einer Verkehrsszene weniger hell zu beleuchten als den Hindergrund. Damit kann die mit der Entfernung geringer werdende Flächenhelligkeit des Laserlichts kompensiert und eine gleichmäßigere Ausleuchtung der Szene erreicht werden. Speziell wird ein Laserstrahl in einer Raumrichtung durch einen Kippspiegel hin- und her geschwenkt und in einer dazu senkrechten Raumrichtung entweder gleichmäßig aufgeweitet oder ebenfalls schnell geschwenkt, um die zu beleuchtende Verkehrsszene aufeinander folgend abzutasten, und die Intensität des Laserlichtes wird synchron mit der Bewegung des Kippspiegels variiert. An die nötige Mechanik für das Schwenken des Spiegels sind aber hohe Anforderungen gestellt, die im Falle eines Fahrzeuges nicht leicht zu erfüllen sind.

Der Erfindung liegt die Aufgabe zugrunde, auf einfachere Weise eine winkelabhängige Abstrahlcharakteristik des Laserlichtes zu erzeugen.

Diese Aufgabe wird bei einer Vorrichtung nach dem Oberbegriff von Patentanspruch 1 durch dessen kennzeichnende Merkmale gelöst.

Indem das Laserlicht von zwei oder mehr verschiedenen Typen von Laserscheinwerfern abgestrahlt wird, die jeweils unterschiedliche Teile des zu beobachtenden Raumwinkelbereiches ausleuchten, kann der Typ der Laserlichtquelle, die Lichtleistung, die Optik und ggf. die Wellenlänge der jeweiligen Laserscheinwerfer optimal an den jeweiligen Beleuchtungszweck angepasst werden, z.B. für einen "Straßenscheinwerfer" und einen "Personenscheinwerfer". Durch geeignete Wahl der von den verschiedenen Typen von Laserscheinwerfern ausgeleuchteten Teile des zu beobachtenden Raumwinkelbereiches und deren Überschneidungsbereiche kann man die Gesamt-Abstrahlcharakteristik auf einfache Weise optimieren.

In einer bevorzugten Ausführungsform wird das Laserlicht an einer von der Vorderseite des Fahrzeuges entfernten Stelle erzeugt und durch einen Lichtleiter zur Vorderseite des Fahrzeuges geleitet, wo es von einer geeigneten Optik abgestrahlt wird. Dies hat den Vorteil, dass die empfindliche Laserlichtquelle an irgendeiner geschützten Stelle eingebaut werden kann, zum Beispiel innerhalb der Elektronik für das Nachtsichtsystem. Vorne am Fahrzeug muss sich nur die robustere Lichtaustrittsoptik befinden.

Die Verwendung von Lichtleitern hat außerdem den Vorteil, dass diese auf einfache Weise mit Verzweigungen versehen werden können, entweder um mehrere Lichtaustrittsoptiken mit Laserlicht aus einer gemeinsamen Quelle zu versorgen oder um das Licht mehrerer Laserlichtquellen, die auch verschiedene Wellenlängen haben können, an eine gemeinsame Lichtaustrittsoptik zu leiten.

Weitere Merkmale und Vorteile der Erfindung ergeben sich aus den Unteransprüchen und aus der folgenden Beschreibung von Ausführungsbeispielen eines Systems zur Verbesserung der Sicht in Fahrzeugen.

Ein Kraftfahrzeug enthält zwei oder mehr in Fahrtrichtung strahlende Infrarot-Laserscheinwerfer. Jeder Laserscheinwerfer enthält einen oder mehrere Infrarotlaser, insbesondere Laserdioden, die im nahen Infrarot arbeiten. Alternativ kann das System auch in einem anderen Spektralbereich außerhalb des sichtbaren Spektrums arbeiten, z.B. im fernen Infrarot oder mit ultraviolettem Licht.

Wenn jeder Laserscheinwerfer nur einen Laser enthält, gibt es verschiedene Möglichkeiten, den zu beobachtenden Raumwinkelbereich vor dem Fahrzeug auszuleuchten:
a) gleichzeitige Ausleuchtung des gesamten Bereiches durch zweidimensionale Strahlaufweitung des Laserstrahls
b) Aufweitung nur in einer Richtung bei gleichzeitiger enger Bündelung in der orthogonalen zweiten Richtung und Schwenken (scan) des ausgeleuchteten flachen Raumwinkelausschnitts in der zweiten Richtung
c) Schwenken des gesamten Laserstrahls in zwei Dimensionen zur abtastenden Ausleuchtung des gesamten Raumwinkelbereiches.

Alternativ besteht die Möglichkeit, ein Array von Laserdioden, die gemeinsam den gesamten Raumwinkelbereich ausleuchten, als Laserscheinwerfer zu verwenden.

Im Ausführungsbeispiel werden zwei verschiedene Typen von Laserscheinwerfern verwendet, die jeweils unterschiedliche Teile des zu beobachtenden Raumwinkelbereiches ausleuchten. Ein erster Typ Laserscheinwerfer, entweder ein Einzelscheinwerfer oder auch mehrere, z.B. zwei Laserscheinwerfer, die jeweils in der Nähe der konventionellen Scheinwerfer angebracht sind, bestrahlt ähnlich wie bei konventionellem Fernlicht im wesentlichen die vor dem Fahrzeug liegende Straße, d.h. einen relativ engen Ausschnitt aus dem zu beobachtenden Raumwinkelbereich. Ein zweiter Typ Laserscheinwerfer, ebenfalls entweder ein Einzelscheinwerfer oder mehrere, z.B. zwei Laserscheinwerfer, die jeweils in der Nähe der konventionellen Scheinwerfer angebracht sind, bestrahlt den gerade beobachteten Raumwinkelbereich mit Schwergewichten auf einem Bereich nahe vor dem Fahrzeug, d.h. vom Fahrzeug aus schräg nach unten, sowie - bedarfsweise asymmetrisch - schräg zur Seite. Insoweit hat der zweite Typ Laserscheinwerfer eine Abstrahlcharakteristik, die konventionellem Abblendlicht ähnlich ist, aber wegen der fehlenden Blendwirkung weiter nach oben gerichtet sein kann, um irgendwelche am Straßenrand befindlichen Personen zuverlässig zu erfassen.

Die Verwendung von zwei verschiedenen Typen von Laserscheinwerfern hat den Vorteil, dass die Laser und die Optik der einzelnen Laserscheinwerfer für den jeweiligen Einsatzzweck optimiert werden kann. Für einen "Straßenscheinwerfer" kommt man z.B. mit einer einzigen Laserdiode ohne jegliche Optik zur Strahlaufweitung aus, wenn die Eigendivergenz der Laserdiode gerade den für "Fernlicht" passenden Wert hat. Andererseits müssen an die Kohärenz des Lasers für einen "Personenscheinwerfer" und dessen Optik zur Strahlaufweitung keine hohen Ansprüche gestellt werden. Ferner können die Lichtleistung und eventuell auch die Wellenlänge der zwei Typen von Laserscheinwerfern optimal an den jeweiligen Einsatzzweck angepasst werden. Wenn zwei solche Laserscheinwerfer im Abstand voneinander angeordnet sind und Licht mit verschiedenen Wellenlängen abstrahlen, welche die weiter unten beschriebene Kamera voneinander trennen kann, ist mit einer einzigen Kamera Stereosehen möglich.

Das Laserlicht kann, muss aber nicht wie bei konventionellen Scheinwerfern unmittelbar vorne am Fahrzeug erzeugt werden. In einem Ausführungsbeispiel werden eine oder mehrere Laserlichtquellen in der Fahrzeugelektronik oder an einer anderen geschützten Stelle untergebracht, von der aus das Laserlicht durch Lichtleiter zu einer oder mehreren Lichtaustrittsoptiken geleitet wird, die den oder die Laserscheinwerfer bilden. Die Lichtleiter können sich auch verzweigen, so dass zum Beispiel ein Laser mehrere Laserscheinwerfer versorgen kann. Oder man kann das Licht mehrerer Laser, die für die vorher beschriebene Optimierung der Beleuchtung auch verschiedene Wellenlängen haben können, über sich vereinigende oder optisch miteinander gekoppelte Lichtleiter einem oder mehreren Laserscheinwerfern zuführen.

Das Kraftfahrzeug enthält weiterhin eine Kamera als Bildsensor, die so angeordnet ist, dass sie die Verkehrsszene aufnimmt, die sich in Fahrtrichtung darbietet. Die Kamera ist zumindest für das von der Umgebung reflektierte Licht des oder der Laser-scheinwerfer empfindlich, in diesem Ausführungsbeispiel im nahen Infrarot. Das von der Kamera aufgenommene Videobild wird dem Fahrer auf einer Anzeigeoptik im Fahrzeug angezeigt, die zum Beispiel ein Display oben auf der Armaturentafel oder ein Projektor zum Einspiegeln des Bildes in einen Bereich der Frontscheibe nach Art eines Head-up-Displays ist.

Die Kamera ist unmittelbar hinter der Frontscheibe in der Nähe des Rückspiegels angebracht, wie z.B. in der GB 2271139 A1 beschrieben. Wie darin beschrieben, enthält die Frontscheibe an dieser Stelle einen Einsatz aus einem IR-durchlässigen Material. In dem hier beschriebenen Ausführungsbeispiel wird eine Frontscheibe aus homogenem Material verwendet, die mit einer Infrarot-abweisenden Folie zur Verminderung der Wärmeeinstrahlung bedeckt ist. Diese Folie ist im Bereich des Blickfeldes der Kamera ausgespart, um Infrarotlicht für die Kamera durchzulassen, wobei die geringe IR-Absorption im Glas selbst in Kauf genommen wird.

Der vertikale Abstand zwischen dem oder den konventionellen Scheinwerfern und den Laserscheinwerfern einerseits und der Kamera andererseits sollte so groß wie möglich sein, damit die Kamera durch den Lichtschleier, das atmosphärische Streulicht, der Scheinwerfer schauen kann. In dieser Hinsicht ist eine Anordnung in Höhe des Rückspiegels, wo man heute z.B. auch einen Regensensor anbringt, von Vorteil, kann aber je nach Fahrzeugdesign möglicherweise noch verbessert werden, indem man die Kamera immer so weit oben wie möglich anbringt.

Bei der oben beschriebenen Anordnung der Kamera hinter der Frontscheibe wird man außerdem darauf achten, das der im Blickfeld der Kamera liegende Bereich der Frontscheibe im Arbeitsbereich mindestens eines Scheibenwischers liegt, damit die Kamera auch bei Regen klare Sicht hat. Im Ausführungsbeispiel werden die Kamera und der Scheibenwischer synchron miteinander betrieben, zum Beispiel indem jeweils in dem Augenblick, in dem sich der Scheibenwischer im Blickfeld der Kamera befindet, nicht das aktuelle Bild, sondern das zuletzt übertragene Bild auf der Anzeigeoptik im Fahrzeug wiedergegeben wird. Das ausgeblendete Zeitintervall ist zu kurz, um vom Fahrer bemerkt zu werden.

Wenn eine Anordnung der Kamera ganz weit oben am Fahrzeug aus irgendwelchen Gründen nicht möglich oder erwünscht ist, kann die Kamera unauffällig und ohne Behinderung durch die Frontscheibe in einem der Außenspiegel untergebracht werden. Wird im zweiten Außenspiegel eine weitere Kamera untergebracht, wird Stereosehen und somit eine Entfernungsbestimmung von Objekten möglich, ohne dass man einen separaten Entfernungsmesser benötigt.

In einem anderen Ausführungsbeispiel ist die Kamera nicht nur in dem Wellenlängenbereich des oder der Laserscheinwerfer empfindlich, sondern auch im sichtbaren Spektrum, wie es zum Beispiel bei einem CCD-Sensor der Fall ist, wenn man das ansonsten übliche Filter für sichtbares Licht weglässt oder deaktivierbar macht. Dadurch kann die Kamera zusätzlich zu ihrer Verwendung bei schlechter Sicht auch als Tageslichtkamera verwendet werden, zum Beispiel um Bilder der aktuellen Verkehrsszene aufzunehmen, anhand derer eine automatische Erkennung von Fahrbahnrändern, Verkehrszeichen oder anderen sicherheitsrelevanten Details durchgeführt wird. Die erkannten Details werden daraufhin ausgewertet, ob irgendeine Gefahrensituation vorliegt, beispielsweise durch Abkommen von der Fahrbahn oder Überschreitung der zulässigen Geschwindigkeit, worauf der Fahrer dann durch akustische oder optische Warnsignale hingewiesen wird.

Wenn die für IR-Nachtsicht nötige Empfindlichkeit der Kamera für deren Verwendung als Tageslichtkamera zu hoch ist, wird sie mit einer automatisch einstellbaren Irisblende versehen, die bei Tag so weit geschlossen wird, dass die Kamera nicht überbelichtet wird. Es gibt aber auch Kameras, deren Lichtempfindlichkeit mit Hilfe ihrer Elektronik auf den jeweils nötigen Wert eingestellt werden kann, so dass man ohne irgendeine Mechanik auskommt.

In einem weiteren Ausführungsbeispiel werden der oder die Laserscheinwerfer und die Kamera nicht nur für das oben beschriebene System zur Verbesserung der Sicht bei Dunkelheit, schlechter Witterung und Nebel verwendet, sondern gleichzeitig von einem System zur Kommunikation mit anderen Fahrzeugen verwendet, zum Beispiel, um laufend Statusinformationen zu senden, um die Fahrer von vorausfahrenden oder entgegenkommenden Fahrzeugen vor irgendwelchen Gefahrensituationen zu warnen oder um Fahrzeuge, die mit eingeschaltetem Fernlicht entgegenkommen, automatisch zu veranlassen, auf Abblendlicht umzuschalten.

Zu diesem Zweck wird das eigentlich nur zur Sichtverbesserung abgestrahlte Laserlicht mit den zu übertragenden Informationen moduliert, und in einem Fahrzeug, das ebenfalls über die beschriebene Kamera und/oder irgendeinen anderen IR-Sensor verfügt und in die Reichweite des Laserlichtes gelangt, können die Informationen aus dem Laserlicht zurückgewonnen und ausgewertet werden.

## Patentansprüche

1. Vorrichtung zur Verbesserung der Sicht in einem Fahrzeug, insbesondere bei Dunkelheit, schlechter Witterung und Nebel, mit einem oder mehreren Laserscheinwerfern, die Laserlicht mit einer Wellenlänge außerhalb des sichtbaren Spektrums in einen vorgegebenen Raumwinkelbereich vor dem Fahrzeug abstrahlen, einer außerhalb des sichtbaren Spektrums empfindlichen Kamera zur Aufnahme von Bildern aktueller Verkehrsszenen und einer Anzeigeoptik im Fahrzeug zur Wiedergabe der aufgenommenen Bilder im sichtbaren Spektrum,
**dadurch gekennzeichnet,**
**dass** mindestens zwei verschiedene Typen von Laserscheinwerfern vorgesehen sind, die jeweils unterschiedliche Teile des zu beobachtenden Raumwinkelbereiches ausleuchten, und dass eine Infrarot-abweisende Folie auf der Frontscheibe des Fahrzeuges im Bereich des Blickfeldes der hinter der Frontscheibe des Fahrzeuges in Höhe des inneren Rückspiegels angeordneten Kamera ausgespart ist.

2. Vorrichtung nach Anspruch 1, **dadurch gekennzeichnet, dass** Laser zur Erzeugung des Laserlichtes an einer von der Vorderseite des Fahrzeuges entfernten Stelle angeordnet und über Lichtleiter mit den Laserscheinwerfern verbunden sind.

3. Vorrichtung nach einem der vorhergehenden Ansprüche, **dadurch gekennzeichnet, dass** die Kamera so weit oben am Fahrzeug wie möglich angebracht ist.

4. Vorrichtung nach einem der Ansprüche 1 bis 3, **dadurch gekennzeichnet, dass** eine weitere Kamera in einem der Außenspiegel des Fahrzeuges untergebracht ist.

5. Vorrichtung nach Anspruch 4, **dadurch gekennzeichnet, dass** in dem anderen Außenspiegel eine weitere außerhalb des sichtbaren Spektrums empfindliche Kamera zur Aufnahme der Bilder aktueller Verkehrsszenen unter einem anderen Winkel untergebracht ist.

6. Vorrichtung nach einem der vorhergehenden Ansprüche, **dadurch gekennzeichnet, dass** die Kamera auch innerhalb des sichtbaren Spektrums empfindlich ist.

7. Vorrichtung nach Anspruch 6, **dadurch gekennzeichnet, dass** eine Einrichtung zur automatischen Anpassung der Lichtempfindlichkeit der Kamera an die Umgebungshelligkeit vorgesehen ist.

8. Vorrichtung nach einem der vorhergehenden Ansprüche, **dadurch gekennzeichnet, dass** der oder die Laserscheinwerfer und/oder die Kamera außerdem Bestandteil eines System zur optischen Kommunikation zwischen mit anderen Fahrzeugen sind.

## Claims

1. Apparatus for improving the visibility in a vehicle, in particular when it is dark, when the weather is poor and in fog, having one or more laser headlights which emit laser light at a wavelength outside the visible spectrum into a predetermined spatial angle range in front of the vehicle, a camera which is sensitive outside the visible spectrum for recording images of actual traffic scenes, and display optics in the vehicle for reproduction of the recorded images in the visible spectrum,
**characterized**
**in that** at least two different types of laser headlights are provided, which each illuminate different parts of the spatial angle range to be observed,
and **in that** an infrared-repelling sheet is cut out on the front windscreen of the vehicle in the area of the field of view of the camera, which is arranged behind the front windscreen of the vehicle at the same level as the internal rear-view mirror.

2. Apparatus according to Claim 1, **characterized in that** lasers for production of laser light are arranged at a point which is remote from the front end of the vehicle, and are connected to the laser headlights via optical waveguides.

3. Apparatus according to one of the preceding claims, **characterized in that** the camera is fitted to the vehicle as high as possible.

4. Apparatus according to one of Claims 1 to 3, **characterized in that** a further camera is accommodated in one of the external vehicle mirrors.

5. Apparatus according to Claim 4, **characterized in that** a further camera, which is sensitive outside the visible spectrum, is accommodated in the other external mirror in order to record the images of actual traffic scenes from a different angle.

6. Apparatus according to one of the preceding claims, **characterized in that** the camera is also sensitive within the visible spectrum.

7. Apparatus according to Claim 6, **characterized in that** a device is provided for automatically matching the light sensitivity of the camera to the environmental brightness.

8. Apparatus according to one of the preceding claims, **characterized in that** the laser headlight or headlights and/or the camera are also a component or components of a system for optical communication with other vehicles.

## Revendications

1. Dispositif d'amélioration de la visibilité dans un véhicule, notamment en présence d'obscurité, de mauvais temps et de brouillard, avec un ou plusieurs projecteurs laser qui émettent de la lumière laser d'une longueur d'onde en dehors du spectre visible dans une plage prédéfinie d'angle solide devant le véhicule, avec une caméra sensible à la lumière en dehors du spectre visible pour enregistrer des images de scènes actuelles de trafic, et avec une unité optique d'affichage dans le véhicule pour restituer dans le spectre visible les images enregistrées,
**caractérisé en ce qu'**il est prévu au moins deux types différents de projecteurs laser, qui éclairent respectivement des éléments différents de la plage d'angle solide à observer,
et **en ce qu'**une feuille repoussant le rayonnement infrarouge qui est prévue sur le pare-brise du véhicule est évidée dans la région du champ de vision de la caméra disposée derrière le pare-brise du véhicule à hauteur du rétroviseur intérieur.

2. Dispositif selon la revendication 1, **caractérisé en ce que** des lasers destinés à produire la lumière laser sont disposés en un endroit éloigné du côté avant du véhicule et sont reliés aux projecteurs laser via des guides de lumière.

3. Dispositif selon l'une quelconque des revendications précédentes, **caractérisé en ce que** la caméra est installée le plus haut possible sur le véhicule.

4. Dispositif selon l'une quelconque des revendications 1 à 3, **caractérisé en ce qu'**une autre caméra est logée dans un des rétroviseurs extérieurs du véhicule.

5. Dispositif selon la revendication 4, **caractérisé en ce qu'**une autre caméra sensible à la lumière en dehors du spectre visible est disposée dans l'autre rétroviseur extérieur afin d'enregistrer sous un autre angle des images de scènes actuelles de trafic.

6. Dispositif selon l'une quelconque des revendications précédentes, **caractérisé en ce que** la caméra est également sensible à la lumière dans le spectre visible.

7. Dispositif selon la revendication 6, **caractérisé en ce qu'**il est prévu un équipement pour adapter automatiquement la sensibilité lumineuse de la caméra à la luminosité ambiante.

8. Dispositif selon l'une quelconque des revendications précédentes, **caractérisé en ce que** le ou les projecteurs laser et/ou la caméra font en outre partie d'un système de communication optique avec d'autres véhicules.
